# EUROPEAN PATENT SPECIFICATION

(11) **EP 4 514 589 B1**
(45) Date of publication and mention of the grant of the patent: **18.03.2026**
(21) Application number: 23734343.9
(22) Date of filing: 24.05.2023
(51) Int. Cl.: B29C 49/44, B29C 49/58, D21J 3/10, B29C 49/48

(54) **MOULD SYSTEM AND METHOD**
FORMSYSTEM UND -VERFAHREN
SYSTÈME ET MÉTHODE DE MOULE

(30) Priority: 26.05.2022 GB 202207771
(43) Date of publication of application: 05.03.2025
(73) Proprietor: Pulpex Limited, Cambridgeshire, CB22 3FG (GB)
(72) Inventor: PROZESKY, Daniel George, Sawston Cambridgeshire CB22 3FG (GB); ASHCROFT, Theo Richard, Sawston Cambridgeshire CB22 3FG (GB); TURNER, Adam Richard, Sawston Cambridgeshire CB22 3FG (GB)
(74) Representative: EIP
(86) International application number: PCT/GB2023/051353
(87) International publication number: WO 2023/227879

(56) References cited:
- EP-B1- 3 105 034
- JP-A- 2000 094 501
- JP-A- 2000 226 800
- JP-A- 2001 032 198
- JP-B2- 3 973 368
- US-A1- 2003 010 462

## Description

### TECHNICAL FIELD

The present invention relates to a mould system for moulding a receptacle and a method of moulding a receptacle.

### BACKGROUND

A mandrel system may be inserted into a mould of a mould system in order for an expandable member of the mandrel system to be expanded to apply a forming operation to a receptacle, such as a bottle, located within the mould. In some examples, after the forming operation has been applied, the mandrel system may be withdrawn from the mould.

JP 3 973368 B2 discloses a core used for dewatering or drying the pulp molded bodies produced through the pulp-molding techniques. The core is equipped with the first elastomer of a freely expandable bag form, the second elastomer of a freely expandable bag arranged inside the first elastomer and a feeding and exhausting pipe for feeding and exhausting fluid separately to the first elastomer and the second elastomer individually so that the first elastomer may be partially compressed with the second elastomer.

US 2003/010462 A1 discloses a method of producing a pulp molded article. The method comprises the steps of: feeding a pulp slurry to a cavity of a papermaking mold having a prescribed cavity shape to form a pulp preform comprising a main part having an opening and a separable part having a flange and connected to the edge of the opening; inserting a pressing member into the preform; expanding the pressing member to press the preform toward the papermaking surface; removing the preform from the papermaking mold; and then cutting the preform at a joint between the separable part and the main part.

EP 3 105 034 B1 discloses a moulding unit for manufacturing preforms made of plastics material, said moulding unit comprising at least one "HR"-type mould, a nozzle comprising at least a nozzle body and a nozzle orifice incorporating a preform stabilizer that forms with a tubular member a mobile assembly that is able to slide axially relative to said nozzle orifice between at least a top position and a bottom position, characterized in that the tubular member is guided so as to slide axially with respect to the nozzle body by at least one guiding means which is interposed radially between said nozzle body and said tubular inlet member, and in that the stabilizer, fixed to said tubular member, is guided with respect to the nozzle body only by way of said at least one guiding means.

JP2000094501A discloses to perform blow mold by forming a cutting edge for cutting a predetermined position of a parison at its front end in a ventilating nozzle for supplying the air by laterally piercing the parison, thereby effectively laterally passing the needle through the parison. In the state that mold members is opened, a parison of a raw material is disposed therebetween. When an expansion pin is raised by a moving means and advanced into a lower end opening of the parison, the air is preliminarily blown off to expand the parison. Then, pinch plates are moved to be approached to one another by a moving means. Subsequently, a pair of molds are moved to be approached to one another, a blowing pin is moved immediately before the members are closed by coming on contact with the parison to pierce the parison, and the pin at this time is smoothly advanced into the parison while cutting the parison by a knife edge of a cutting blade formed at its front end.

Further on JP 2001 032198 A and JP 2000 226800 A also disclose similar subject-matter as indicated above.

### SUMMARY

The invention is defined by the features of the independent claim 1. According to a first aspect of the present invention, there is provided a mould system for moulding a receptacle, the mould system comprising: a mould comprising a mould cavity and an opening; and a mandrel system comprising a reference point, a mandrel and an expandable member, wherein: the mandrel is at least partially located, or at least partially locatable, inside the expandable member and comprises one or more holes through which a fluid is flowable in use from an interior of the mandrel to an exterior of the mandrel to expand the expandable member; when the mandrel is at least partially located inside the expandable member, the mandrel system is positionable relative to the mould such that the reference point is at a fixed position relative to the mould and the mandrel and the expandable member extend into the mould cavity through the opening such that there is a clearance between the expandable member and a base of the mould cavity opposite the opening; and the expandable member and at least a part of the mandrel are moveable relative to the reference point to vary the clearance. The expandable member may be considered an inflatable member or bladder. As a result, the expandable member may be positioned appropriately relative to the base. If the expandable member is inappropriately positioned (for example, being located too far from the base) then, during expansion, the expandable member may contact an upper part of a receptacle within the mould cavity before the expandable member has filled a lower part of the receptacle. Further expansion of the expandable member in a downward direction may then be inhibited by friction between the expandable member and the upper part of the receptacle. Inhibited expansion may result in the expandable member not fully filling the lower part of the receptacle. This may lead to an incorrect pressure being applied to the lower part of the receptacle (for example, a base of the receptacle). Thereby, this part of the receptacle may be insufficiently compacted leading to a weakness in the receptacle and/or poor receptacle quality. Alternatively, inhibited expansion may result in the expandable member stretching excessively to fully fill the lower part of the receptacle. Excessive stretching may reduce the uniformity of the pressure applied by the expandable member to the receptacle. This reduction in uniformity may be detrimental to the quality of the receptacle, for example, resulting in weaknesses or variable thickness in the receptacle. Additionally, excessive stretching may fatigue the expandable member, thereby reducing the longevity of the expandable member, or lead to rupturing of the expandable member. Having at least part of the mandrel being moveable enables appropriate positioning of the expandable member within the mould cavity. As a result, the quality of receptacles manufactured in the mould system may be improved and/or the longevity of the expandable member may be improved. Optionally, the expandable member and a whole of the mandrel are moveable relative to the reference point to vary the clearance. The mandrel may be unitary. Having at least part of the mandrel being moveable may be particularly advantageous in examples where the mould is one of a plurality of moulds having cavities of different geometries, and in particular different heights. In these examples, the clearance may be varied based on the specific geometry of each mould cavity to appropriately position the expandable member within each mould. Beneficially, this may remove the need for each mould to have a bespoke mandrel system. In some examples, the receptacle is a bottle, such as a fibre-based bottle. Optionally, the fluid is flowable in use through the holes from the exterior of the mandrel to the interior of the mandrel.

The mandrel system may comprise a connector for connecting the mandrel system to the mould, and the reference point may be comprised by the connector. The connector may provide a convenient way of positioning the mandrel system relative to the mould and fixing the reference point relative to the mould.

The mandrel system comprises a controller configured to cause movement of the expandable member and the at least a part of the mandrel relative to the reference point. Thereby, an amount of operator input required to operate the mould system may be reduced compared to, for example, a mould system where the operator manually moves the mandrel and expandable member. This may in turn improve overall product quality and consistency. Additionally, this may result in reduced processing times and increased throughput.

The controller may be configured to cause movement of the expandable member and the at least a part of the mandrel relative to the reference point such that the clearance has a predetermined value. The predetermined value may beneficially enable a desirable clearance to be specified. Specifically, as described above, if the clearance is too great, the expansion of the expandable member downwards may be inhibited. Conversely, if the clearance is too small (i.e., the expandable member is too close to the base), suboptimal expansion of the expandable member may occur. Specifically, the expandable member may prematurely contact the base of the receptacle, which may inhibit the subsequent expansion of the expandable member outwards into the corners of the receptacle. This may result in a reduction in the quality of the receptacle and/or reduce the longevity of the expandable member, as also described above. The mould may be one of a plurality of moulds having cavities of different geometries, and in particular different heights. Irrespective of the geometry of the mould cavity, the controller moves the mandrel and the expandable such that the clearance between the expandable member and the base of the mould is the same predetermined value. As a result, the expandable member may be appropriately positioned for each mould without requiring a bespoke mandrel and expandable member for each mould. This may reduce the cost of the system as well as reduce processing times by removing the need to switch the mandrel and expandable member when switching moulds.

The predetermined value may be no less than 2 mm. As a result, the expandable member may be appropriately positioned to reduce the likelihood of suboptimal expansion of the expandable member, as discussed above.

The predetermined value may be no greater than 11 mm. Thereby the expandable member may be appropriately positioned to reduce the likelihood of the expansion of the expandable member downward being inhibited, as discussed above.

The controller may be configured to determine the predetermined value based on a characteristic of the mould. The expandable member may thereby be positioned appropriately for the specific mould. Additionally, the amount of operator input required to operate the mould system may be reduced further, as the operator is not required to determine and input the predetermined value. Optionally, the characteristic of the mould may be one of: a height of the mould, a width of the mould, and a geometry of the mould. Optionally, the controller may be configured to determine the predetermined value based on a characteristic of the expandable member. The characteristic of the expandable member may be one of: a height of the expandable member, a width of the expandable member, a geometry of the expandable member, and a material of the expandable member, for example.

The controller may store a lookup table of different predetermined values associated with respective different mould characteristics; and the controller may be configured to select the predetermined value from the lookup table using the characteristic of the mould. This may remove the requirement for an operator to calculate the clearance when a mould is switched for another mould of a different geometry. Thereby, the downtime incurred when switching between moulds may be reduced. Optionally, the predetermined values may be associated with respective different mould characteristics and respective different expandable member characteristics. The controller may be configured to select the predetermined value from the lookup table using the characteristic of the mould and the characteristic of the expandable member.

An end of the mandrel may be attachable, or attached, to the expandable member. For example, the end of the mandrel may be detachably attachable, or detachably attached, to the expandable member. As a result, the end of the mandrel may be attached or detached from the expandable member during different stages of a manufacturing process. For example, when attached to the mandrel, the expandable member may be more easily positioned and moved. This may be beneficial for positioning the expandable member within the mould prior to expansion, and/or during insertion or withdrawal of the mandrel system from the mould. When detached from the mandrel, the expandable member may expand uninhibited by the end of the mandrel, which might otherwise inhibit the expansion. Uninhibited expansion of the expandable member may improve the magnitude and uniformity of a pressure applied by the expandable member to a receptacle within the mould. Thereby, the quality of the receptacle may be improved due to improved compaction which may result from the improved magnitude and uniformity of the pressure applied. Additionally, uninhibited expansion may reduce stress concentrations in the expandable member which may damage or fatigue the expandable member. Thereby, the longevity of the expandable member may be improved.

When the end of the mandrel is attached to the expandable member, the end of the mandrel may be moveable relative to the reference point in response to expansion of the expandable member. The expandable member may thereby expand relatively uninhibited by the mandrel whilst also being attached to the mandrel. Being attached to the mandrel may beneficially enable the mandrel to manipulate the expandable member, which may improve the functionality of the mandrel system. For example, the mandrel may be used to appropriately position the expandable member within the mould, twist the expandable member around the mandrel and/or vary the length and thereby the width of the expandable member. Optionally, the mandrel comprises a first part and a second part, the second part comprises the end of the mandrel, and the second part is moveable, such as telescopically, relative to the first part in response to expansion of the expandable member. Optionally, the mandrel system comprises an actuator operable in a first mode in which the actuator moves the end of the mandrel relative to the reference point to vary a length of the expandable member and thereby to vary a width of the expandable member; and a second mode in which the actuator permits movement of or moves the end of the mandrel relative to the reference point in response to expansion of the expandable member. The actuator may comprise one of a rack and pinion system, a pneumatic system and a hydraulic system.

The expandable member may be arranged to detach from the end of the mandrel in response to expansion of the expandable member. Thereby the expandable member may move freely relative to the end of the mandrel during expansion and thereby expand uninhibited by the end of the mandrel. As discussed above, uninhibited expansion of the expandable member may improve the magnitude and uniformity of the pressure applied by the expandable member to a receptacle within the mould. Additionally, uninhibited expansion may reduce stress concentrations in the expandable member which may damage or fatigue the expandable member. Thereby, the longevity of the expandable member may be improved.

The mandrel and the expandable member may be moveable relative to the reference point to vary a width of the expandable member. As a result, the width of the expandable member may be varied to best suit the requirements of a manufacturing process which employs the mandrel system. For example, reducing the width of the expandable member may be beneficial in facilitating passage of the expandable member through an opening of the mould which may occur when the mandrel system is inserted into, and subsequently withdrawn from, the mould. Reducing the width may enable the expandable member to pass through the opening without contacting the mould and thereby damaging the expandable member. Additionally, in the case where a receptacle is located within the mould and the expandable member is inserted into the receptacle to apply a forming operation to the receptacle, reducing the width may reduce the likelihood of the expandable member contacting and damaging the receptacle during insertion and/or withdrawal. Increasing the width of the expandable member may be beneficial during expansion of the expandable member as the expandable member may be able to expand relatively uninhibited by the mandrel. Uninhibited expansion of the expandable member may improve the magnitude and uniformity of a pressure applied by the expandable member to the receptacle during the forming operation. Additionally, uninhibited expansion may reduce stress concentrations in the expandable member which may damage or fatigue the expandable member and thereby the longevity of the expandable member may be improved. Optionally, the mandrel system may comprise a connector for connecting the mandrel system to the mould, the expandable member may be attached to the connector, and the mandrel may be moveable relative to the connector. Optionally, the base of the mould is a fixed distance from the opening of the mould. As a result, the mould may be more robust and cheaper to manufacture compared to a mould in which the base of the mould is moveable relative to the opening, which may be done to achieve mould cavities of different heights.

The mould system may comprise a further mould; the further mould may comprise a further mould cavity and a further opening; the further mould cavity may have a different geometry to a geometry of the mould cavity; when the mandrel is at least partially located inside the expandable member, the mandrel system may be positionable relative to the further mould such that the reference point is at a fixed position relative to the further mould, and the mandrel and the expandable member extend into the further mould cavity through the further opening such that there is a further clearance between the expandable member and a base of the further mould cavity opposite the further opening; the mandrel and the expandable member may be moveable relative to the reference point to vary the further clearance; and the mandrel system may comprise a controller configured to: cause movement of the mandrel and expandable member relative to the reference point such that the clearance and the further clearance have the same value. Thereby, receptacles of different geometries (for example different heights) may be manufactured using the same mandrel system whilst also ensuring the appropriate positioning of the expandable member.

According to a second aspect of the present invention, there is provided a method of moulding a receptacle, the method comprising: providing the mould system of the first aspect of the present invention; when the mandrel is at least partially located inside the expandable member, moving the expandable member and the at least a part of the mandrel relative to the reference point to vary the clearance; and positioning the mandrel system relative to the mould such that the reference point is at the fixed position relative to the mould, and the mandrel and the expandable member extend into the mould cavity through the opening. As a result, the expandable member may be positioned appropriately relative to the base. If the expandable member is inappropriately positioned (for example, being located too far from the base) then, during expansion, the expandable member may contact an upper part of a receptacle within the mould cavity before the expandable member has filled a lower part of the receptacle. Further expansion of the expandable member in a downward direction may then be inhibited by friction between the expandable member and the upper part of the receptacle. Inhibited expansion may result in the expandable member not fully filling the lower part of the receptacle. This may lead to an incorrect pressure being applied to the lower part of the receptacle (for example, a base of the receptacle). Thereby, this part of the receptacle may be insufficiently compacted leading to a weakness in the receptacle and/or poor receptacle quality. Alternatively, inhibited expansion may result in the expandable member stretching excessively to fully fill the lower part of the receptacle. Excessive stretching may reduce the uniformity of the pressure applied by the expandable member to the receptacle. This reduction in uniformity may be detrimental to the quality of the receptacle, for example, resulting in weaknesses or variable thickness in the receptacle. Additionally, excessive stretching may fatigue the expandable member, thereby reducing the longevity of the expandable member, or lead to rupturing of the expandable member. Having at least part of the mandrel being moveable enables appropriate positioning of the expandable member within the mould cavity. As a result, the quality of receptacles manufactured in the mould system may be improved and/or the longevity of the expandable member may be improved. Optionally, the moving comprises moving the expandable member and a whole of the mandrel relative to the reference point to vary the clearance. The mandrel may be unitary. Having at least part of the mandrel being moveable may be particularly advantageous in examples where the mould is one of a plurality of moulds having cavities of different geometries, and in particular different heights. In these examples, the clearance may be varied based on the specific geometry of each mould cavity to appropriately position the expandable member within each mould. Beneficially, this may remove the need for each mould to have a bespoke mandrel system. Optionally, the method may comprise expanding the expandable member to apply a forming operation to a receptacle located within the mould cavity. In some examples, the receptacle is a bottle, such as a fibre-based bottle.

The mandrel system may comprise a connector, the connector may comprise the reference point, and the positioning the mandrel system may comprise connecting the connector to the mould. The connector may provide a convenient way of positioning the mandrel system relative to the mould and fixing the reference point relative to the mould.

The moving may comprise moving the expandable member and the at least a part of the mandrel relative to the reference point such that the clearance has a predetermined value. The predetermined value may beneficially enable a desirable clearance to be specified. Specifically, as described above, if the clearance is too great, the expansion of the expandable member downwards may be inhibited. Conversely, if the clearance is too small (i.e., the expandable member is too close to the base), suboptimal expansion of the expandable member may occur. Specifically, the expandable member may prematurely contact the base of the receptacle, which may inhibit the subsequent expansion of the expandable member outwards into the corners of the receptacle. This may result in a reduction in the quality of the receptacle and/or reduce the longevity of the expandable member, as also described above. The mould may be one of a plurality of moulds having cavities of different geometries, and in particular different heights. Irrespective of the geometry of the mould cavity, the mandrel and the expandable may move such that the clearance between the expandable member and the base of the mould is the same predetermined value. As a result, the expandable member may be appropriately positioned for each mould without requiring a bespoke mandrel and expandable member for each mould. This may reduce the cost of the system as well as reduce processing times by removing the need to switch the mandrel and expandable member when switching moulds. Optionally, the predetermined value may be no less than 2 mm. Optionally, the predetermined value may be no greater than 11 mm.

The method may comprise determining the predetermined value based on a characteristic of the mould. The expandable member may thereby be positioned appropriately for the specific mould. Optionally, the characteristic of the mould may be one of: a height of the mould, a width of the mould, and a geometry of the mould. Optionally, the method comprises determining the predetermined value based on a characteristic of the expandable member. The characteristic of the expandable member may be one of: a height of the expandable member, a width of the expandable member, a geometry of the expandable member, and a material of the expandable member, for example. Optionally, the mandrel system comprises a controller, and the determining comprises the controller determining the predetermined value based on the characteristic of the mould.

The determining the predetermined value may comprise selecting the predetermined value, from a lookup table of different predetermined values associated with respective different mould characteristics, using the characteristic of the mould. This may remove the requirement for an operator to calculate the clearance when a mould is switched for another mould of a different geometry. Thereby, the downtime incurred when switching between moulds may be reduced. Optionally, the selecting the predetermined value may comprise selecting the predetermined value, from a lookup table of different predetermined values associated with respective different mould characteristics and respective different expandable member characteristics, using the characteristic of the mould and the characteristic of the expandable member.

The method may comprise at least one of: detaching an end of the mandrel from the expandable member, and attaching the end of the mandrel to the expandable member. As a result, the end of the mandrel may be attached or detached from the expandable member during different stages of a manufacturing process. For example, when attached to the mandrel, the expandable member may be more easily positioned and moved. This may be beneficial for positioning the expandable member within the mould prior to expansion, and/or during insertion or withdrawal of the expandable member from the mould. When detached from the mandrel, the expandable member may expand uninhibited by the end of the mandrel, which might otherwise inhibit the expansion. Uninhibited expansion of the expandable member may improve the magnitude and uniformity of a pressure applied by the expandable member to a receptacle within the mould. Thereby, the quality of the receptacle may be improved due to improved compaction which may result from the improved magnitude and uniformity of the pressure applied. Additionally, uninhibited expansion may reduce stress concentrations in the expandable member which may damage or fatigue the expandable member. Thereby, the longevity of the expandable member may be improved. Alternatively, the method may comprise expanding the expandable member to apply a forming operation to a receptacle located within the mould cavity, and moving the end of the mandrel relative to the reference point during the expanding the expandable member. Optionally, the end of the mandrel is attached to the expandable member or the method comprises attaching the end of the mandrel to the expandable member, and the method comprises moving the end of the mandrel relative to the reference point in response to expansion of the expandable member.

The method may comprise: expanding the expandable member to apply a forming operation to a receptacle located within the mould cavity; and detaching the end of the mandrel from the expandable member during the expanding of the expandable member. Thereby the expandable member may move freely relative to the end of the mandrel during expansion and thereby expand uninhibited by the end of the mandrel. As discussed above, uninhibited expansion of the expandable member may improve the magnitude and uniformity of the pressure applied by the expandable member to a receptacle within the mould. Additionally, uninhibited expansion may reduce stress concentrations in the expandable member which may damage or fatigue the expandable member. Thereby, the longevity of the expandable member may be improved.

The moving the expandable member and the at least a part of the mandrel relative to the reference point may causes a width of the expandable member to vary. As a result, the width of the expandable member may be varied to best suit the requirements of a manufacturing process which employs the mandrel system. For example, reducing the width of the expandable member may be beneficial in facilitating passage of the expandable member through an opening of the mould which may occur when the mandrel system is inserted into, and subsequently withdrawn from, the mould. Reducing the width may enable the expandable member to pass through the opening without contacting the mould and thereby damaging the expandable member. Additionally, in the case where a receptacle is located within the mould and the expandable member is inserted into the receptacle to apply a forming operation to the receptacle, reducing the width may reduce the likelihood of the expandable member contacting and damaging the receptacle during insertion and/or withdrawal. Increasing the width of the expandable member may be beneficial during expansion of the expandable member as the expandable member may be able to expand relatively uninhibited by the mandrel. Uninhibited expansion of the expandable member may improve the magnitude and uniformity of a pressure applied by the expandable member to the receptacle during the forming operation. Additionally, uninhibited expansion may reduce stress concentrations in the expandable member which may damage or fatigue the expandable member and thereby the longevity of the expandable member may be improved.

The method may comprise: locating a receptacle in the mould, the receptacle being formed, at least partially, of paper pulp; and expanding the expandable member to apply a forming operation to the receptacle. The choice of paper is ecologically more friendly than plastic. However, in being formed of paper, the quality of the receptacle is particularly sensitive to poor compaction. For example, poor compaction may result in increased permeability to liquids and/or excessive weakness of the receptacle. By varying the clearance between the expandable member and the base of the mould, and thereby enabling appropriate positioning of the expandable member, such effects of poor quality may be reduced. In some examples, the receptacle is a bottle, such as a fibre-based bottle.

The method may comprise expanding the expandable member as part of a thermoforming operation to a receptacle located within the mould cavity. Thermoforming may improve the mechanical properties of the receptacle, such as stiffness, as well as the surface finish of the receptacle. Optionally, moving the mandrel and the expandable member relative to the reference point may comprise moving the mandrel and expandable member relative to the reference point such that the clearance has a predetermined value. The method may comprise providing a further mould, the further mould comprising a further mould cavity and a further opening, the further mould cavity having a different geometry to a geometry of the mould cavity. The method may comprise moving the mandrel and the expandable member relative to the reference point to vary a clearance between an expandable member and a further base of the further mould cavity opposite the further opening such that the further clearance has the predetermined value. The method may comprise positioning the mandrel system relative to the further mould such that the reference point is at a fixed position relative to the further mould, and the mandrel and the expandable member extend into the further mould cavity through the further opening. Thereby, receptacles of different geometries (for example different heights) may be manufactured using the same mandrel system whilst also ensuring the appropriate positioning of the expandable member. In some examples, the receptacle is a bottle, such as a fibre-based bottle.

Also disclosed is a receptacle obtainable or obtained from a fabrication method comprising the method of the second aspect.

The receptacle may be a bottle, such as a fibre-based bottle. For example, the receptacle may be obtainable or obtained from the method of the second aspect of the invention. The fabrication method may comprise at least one additional process. The at least one additional process may comprise coating the receptacle to produce a coated receptacle. The at least one additional process may comprise drying the receptacle or the coated receptacle to produce a dried receptacle. The at least one additional process may comprise applying a closure to the receptacle, the coated receptacle or the dried receptacle.

Also disclosed is a mandrel system for use with a mould to mould a receptacle, the mandrel system comprising: a reference point, and a mandrel, wherein: the mandrel comprises a plurality of holes through which a fluid is flowable in use from an interior of the mandrel to an exterior of the mandrel; and at least part of the mandrel is moveable relative to the reference point to vary a distance between the reference point and an end of the mandrel.

Optionally, the mandrel system comprises a connector for connecting the mandrel system to a mould, and the reference point is comprised by the connector.

Optionally, the mandrel system comprises a controller configured to cause movement of the at least a part of the mandrel relative to the reference point.

Optionally, the controller is configured to cause movement of the at least a part of the mandrel relative to the reference point such that the distance has a predetermined value.

Optionally, the controller is configured to determine the predetermined value based on a characteristic of a mould.

Optionally, the controller stores a lookup table of different predetermined values associated with respective different mould characteristics; and the controller is configured to select the predetermined value from the lookup table using the characteristic of the mould.

Optionally, the mandrel system comprises an expandable member, and the end of the mandrel is attachable, or attached, to the expandable member.

Optionally, when the end of the mandrel is attached to the expandable member, the end of the mandrel is moveable relative to the reference point in response to expansion of the expandable member.

Optionally, the expandable member is arranged to detach from the end of the mandrel in response to expansion of the expandable member.

Optionally, the mandrel and the expandable member are moveable relative to the reference point to vary a width of the expandable member.

Optional features of aspects of the present invention may be equally applied to other aspects of the present invention, where appropriate.

### BRIEF DESCRIPTION OF DRAWINGS

Embodiments of the invention will now be described, by way of example only, with reference to the accompanying drawings, in which:
Figure 1 shows a schematic view of an example process for making bottles from paper pulp;
Figure 2 shows a simplified section view of an example mould system;

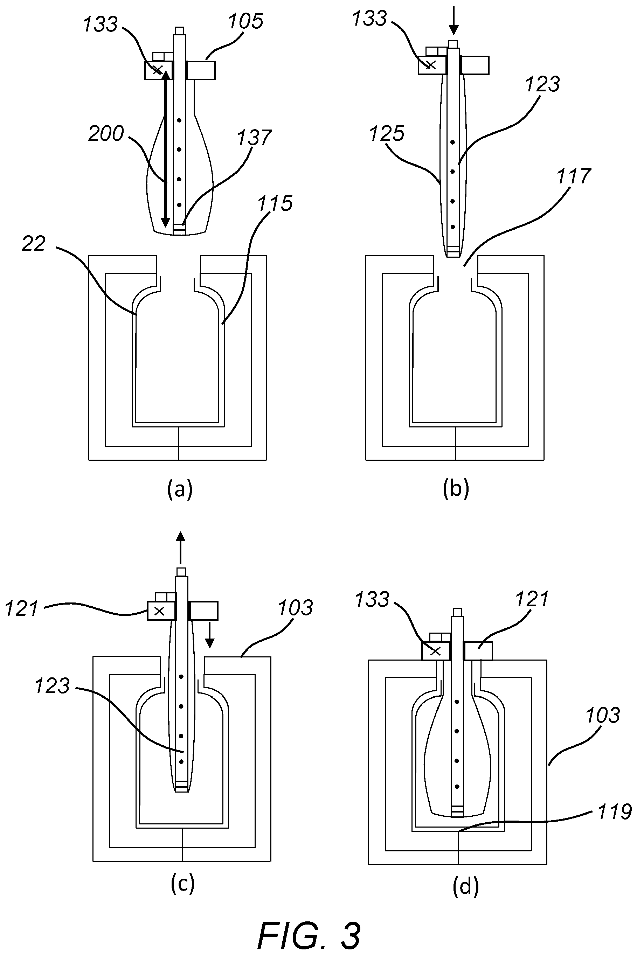

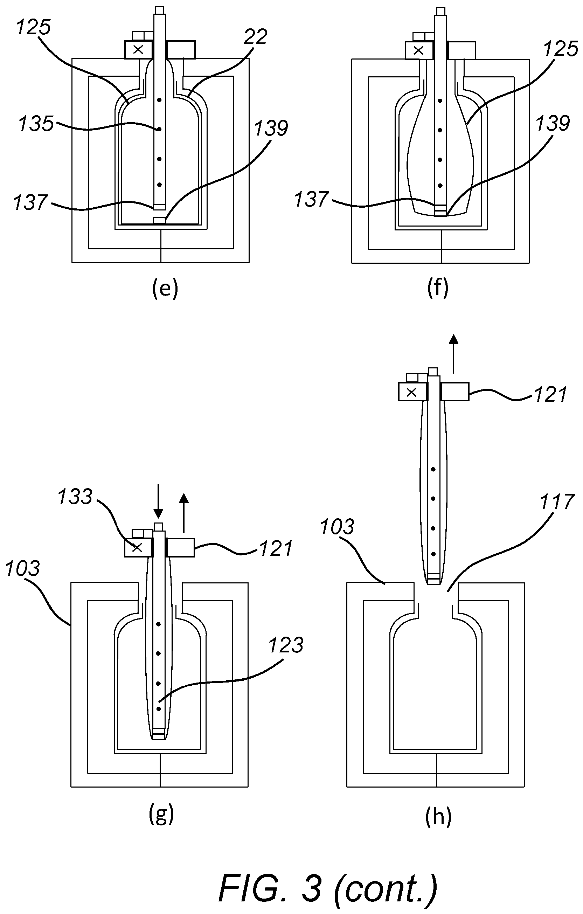

Figure 3 shows, by way of simplified sections, different stages in the insertion and withdrawal of a mandrel system from a mould of the mould system, wherein (a) the mandrel system is located outside the mould; (b) a mandrel is moved relative to a connector to decrease the width of an expandable member of the mandrel system; (c) the mandrel system is inserted into the mould; (d) the mandrel system extends into the mould; (e) the expandable member is expanded to apply a forming operation to a receptacle located within the mould; (f) the expandable member is collapsed; (g) the connector and mandrel are moved to reduce the width of the expandable member; and (h) the mandrel system is withdrawn from the mould;
Figure 4 is a simplified section view of the mould and a further mould of the mould system with the mandrel system extending into each mould;
Figure 5 shows a simplified section view of an alternative example mandrel system;

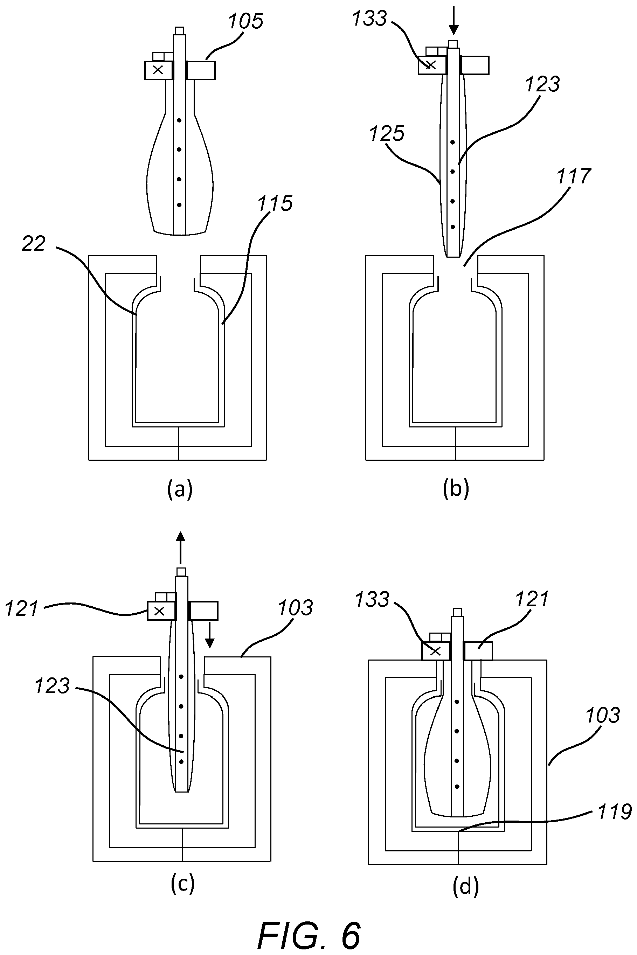

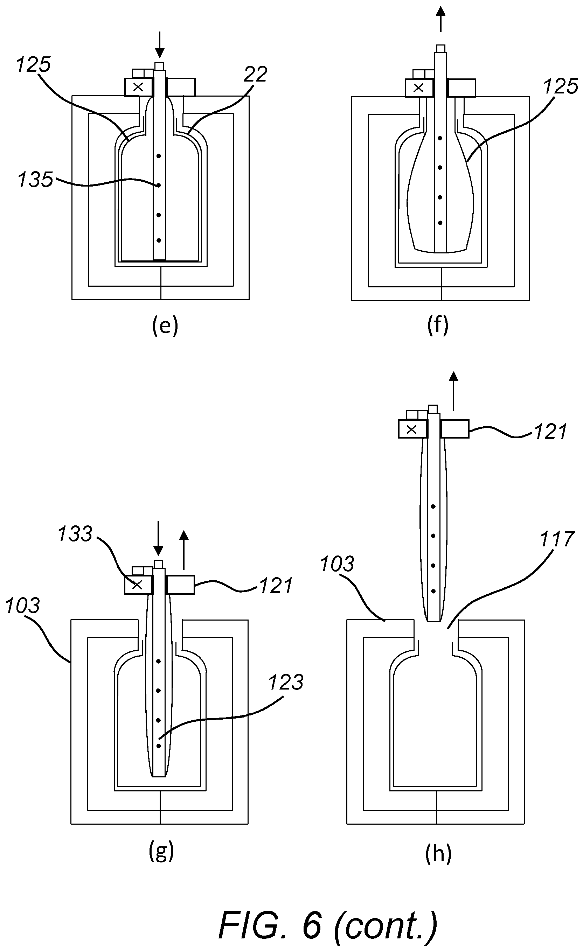

Figure 6 shows, by way of simplified sections, different stages in the insertion and withdrawal of the alternative example mandrel system from the mould, wherein (a) the alternative example mandrel system is located outside the mould; (b) a mandrel is moved relative to a connector to decrease the width of an expandable member of the alternative example mandrel system; (c) the alternative example mandrel system is inserted into the mould; (d) the alternative example mandrel system extends into the mould; (e) the expandable member is expanded to apply a forming operation to a receptacle located within the mould; (f) the expandable member is collapsed; (g) the connector and mandrel are moved to reduce the width of the expandable member; and (h) the alternative example mandrel system is withdrawn from the mould;
Figure 7 shows a simplified section view of a further example mandrel system; and

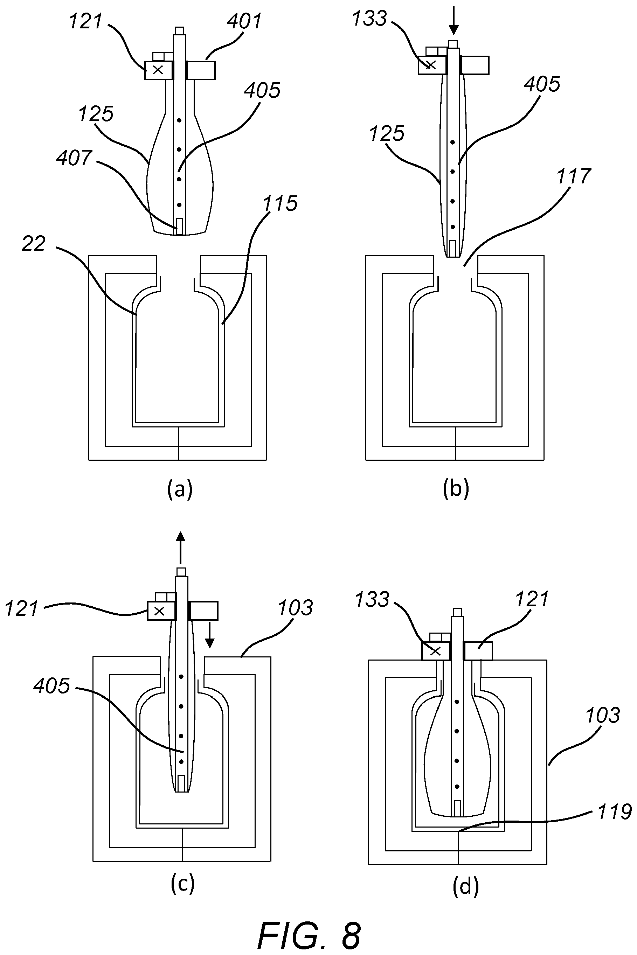

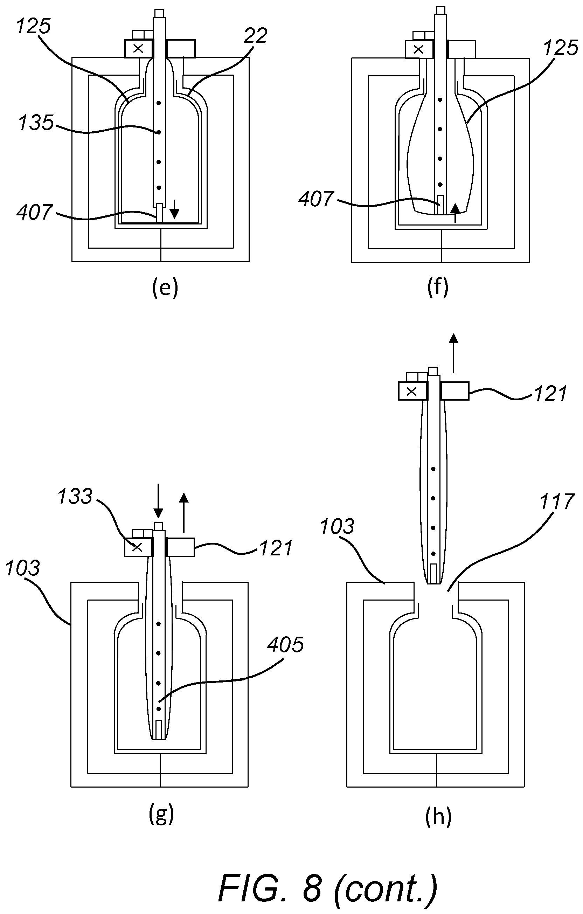

Figure 8 shows, by way of simplified sections, different stages in the insertion and withdrawal of the further example mandrel system from the mould, wherein (a) the further example mandrel system is located outside the mould; (b) a mandrel is moved relative to a connector to decrease the width of an expandable member of the further example mandrel system; (c) the further example mandrel system is inserted into the mould; (d) the further example mandrel system extends into the mould; (e) the expandable member is expanded to apply a forming operation to a receptacle located within the mould; (f) the expandable member is collapsed; (g) the connector and mandrel are moved to reduce the width of the expandable member; and (h) the further example mandrel system is withdrawn from the mould.

### DETAILED DESCRIPTION

The following description presents exemplary embodiments and, together with the drawings, serves to explain principles of embodiments of the invention.

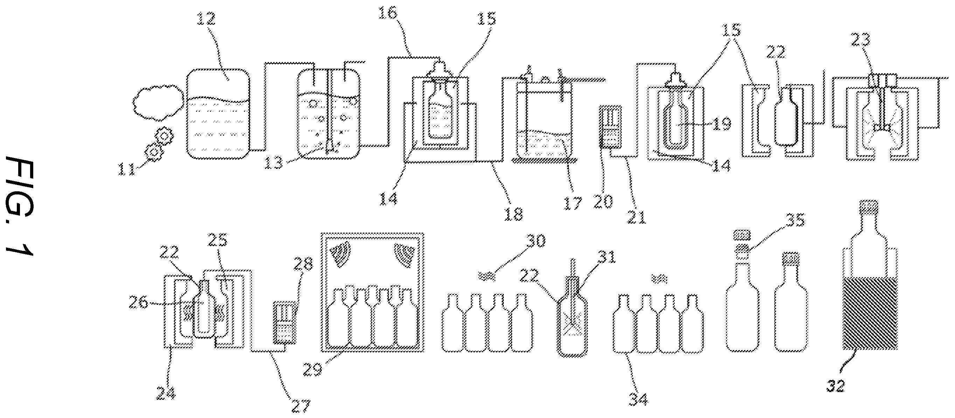

Figure 1 shows a process for making bottles from paper pulp (i.e., which can form the basis of an example fibre suspension). The process is merely exemplary and is provided to give context to examples of the present invention. Broadly speaking, the exemplary process comprises providing a fibre suspension, introducing the fibre suspension into a mould cavity of a porous first mould and using the porous first mould to expel a liquid (such as water) from the fibre suspension to produce a wet precursor or embryo (which may itself be considered a moulded receptacle), further moulding the wet precursor in a mould to produce a further-moulded receptacle, coating the further-moulded receptacle to produce a coated moulded receptacle, drying the coated moulded receptacle to produce a dried receptacle, and applying a closure to the dried receptacle. As will be apparent at least from the following description, modifications may be made to the exemplary process to provide variants thereof in which other examples of the present invention may be embodied.

In this example, providing the fibre suspension comprises preparing the fibre suspension from ingredients thereof. More specifically, the preparing comprises providing pulp fibres, such as paper pulp fibres, and mixing the pulp fibres with a liquid to provide hydrated pulp fibres. In this example, the pulp fibres are provided in sheet form from a supplier and the liquid comprises water and one or more additives. In this example, the liquid is mixed with the pulp fibres to provide hydrated pulp fibres having a solid fibres content of 1wt% to 5wt% (by dry mass of fibres). In examples, the one or more additives includes a shorting agent, such as alkylketene dimer (AKD). The hydrated pulp fibres typically comprise AKD in an amount of 0.4wt% with respect to the total dry mass of the solid fibres in the hydrated pulp fibres. In some examples, one or more additives are present in the liquid at the point of mixing the pulp fibres with the liquid In some examples, one or more additives are included in the hydrated pulp fibres after mixing the pulp fibres with the liquid (e.g. the pulp fibres are hydrated for a period of time, such as from 2 to 16 hours, and then one or more additives are supplied to the hydrated pulp fibres). The hydrated pulp fibres are passed between plates of a valley beater 11 or refiner that are in motion relative to each other. This fibrillates some, or all, of the fibres, meaning that cell walls of those fibres are caused to become partially delaminated so that wetted surfaces of those fibres comprise protruding hairs or fibrillations. These fibrillations will help to increase a strength of bonds between the fibres in the dried end product. In other examples, the valley beater 11 or refiner may be omitted.

The resultant processed pulp is stored in a vat 12 in a relatively concentrated form (e.g. a solid fibres content of 1wt% to 5wt%) to reduce a required storage space. At an appropriate time, the processed pulp is transferred to a mixing station 13 at which the processed pulp is diluted in further water and, optionally, mixed with one or more additives (as well as, or in place of, the one or more additives provided with the hydrated pulp fibres) to provide the fibre suspension ready for moulding.

In this example, the porous first mould 15 comprises two half-moulds that are movable towards and away from each other, in this case using a hydraulic ram. In this example, each of the half-moulds is a monolithic or unitary tool formed by additive manufacturing (e.g. 3D-printing) that defines a mould profile, and, when the half-moulds are brought into contact with each other, their respective mould profiles cooperate to define the mould cavity in which the wet precursor or moulded receptacle is to be formed. Each half-mould may itself define a smaller moulding cavity and, when brought into cooperation with a second half-mould, the smaller moulding cavities may combine to provide the overall mould cavity. The two half-moulds may themselves be considered "splits" or "moulds" and the overall porous first mould 15 may be considered a "split-mould" or, again, a "mould". In other examples, the porous first mould 15 may comprise more than two splits, such as three, four or six splits, that cooperate to define the moulding cavity.

In Figure 1, the fibre suspension (also known as slurry) is top-filled into the porous mould 15, in contrast to moulding processes that dip a mould in slurry. The fibre suspension is drawn under vacuum via a line 16 and into the porous mould 15, with excess suspending liquid being drawn through the porous mould 15 under vacuum via a line 18 into a tank 17. Shot mass may be controlled by measuring (e.g., weighing) the amount of liquid drawn into the tank 17. A weight scale platform supporting the tank 17 is visible in Figure 1. Once a required amount (e.g. a predetermined volume, such as 10 litres, or a predetermined mass, such as 10 kilograms) of liquid has been collected in the tank 17, suction of the suspending liquid through the porous mould 15 is stopped and the porous mould 15 is opened to ambient air. In this example, the suspending liquid drawn with the fibre suspension in line 16 is water, or predominantly water (as additives may also be present). The liquid drawn under vacuum via the line 18 and into the tank 17 is substantially free of fibres, since these are left behind against the walls of the porous mould 15 to form an embryo of the moulded receptacle.

In one form, in order to remove further suspending liquid (e.g. water) from the embryo, and form or consolidate the three-dimensional shape of the receptacle, an impermeable inflation element 19, e.g., a collapsible bladder, is inserted into the porous mould 15 and expanded to act as an internal high-pressure core structure for the porous mould 15. This process strengthens the wet embryo so that it can be handled, and displaces water from in between the fibres, thereby increasing the efficiency of a subsequent drying process. The inflation element 19 is actuated and regulated using a hydraulic pump 20. The pump 20 has a cylinder that displaces a fluid in a line 21 into the inflation element 19, to expand the inflation element 19 radially and into conformity with the mould cavity. Fluid within the line 21 is preferably non-compressible, such as water. Water also has the advantage over other non-compressible liquids that any leaking or bursting of the bladder 19 will not introduce a new substance to the system (since the suspending liquid is already water, or predominantly water).

Demoulding occurs when the porous mould 15 opens for removal of the self-supporting moulded receptacle 22. Mould cleaning 23 is preferably performed subsequently, to remove small fibres and maintain a porosity of the porous mould 15. In this example, a radially firing high-pressure jet is inserted into the mould cavity while the mould 15 is open. This dislodges fibres from the wall of the mould cavity. Alternatively, or in addition, water from the tank 17 is pressurised through the back of the porous mould 15 to dislodge entrapped fibres. Water is drained for recycling back to an upstream part of the system. It is noteworthy that cleaning is important for conditioning the porous mould 15 for re-use. The porous mould 15 may appear visibly clean after removal of the receptacle, but its performance could be compromised without cleaning.

According to Figure 1, the formed but unfinished receptacle 22 is subsequently transported to a second moulding station where, in a, e.g., aluminium, mould 25, pressure and heat are applied for thermoforming a desired neck and surface finish, optionally including embossed and/or debossed surface features. After two halves of the mould 25 have closed around the receptacle 22, a pressuriser is engaged. For example, a bladder 26 (e.g., a thermoforming bladder 26) is inserted into the receptacle 22. The bladder 26 is inflated via a line 27 by a pump 28 to supply pressurised fluid, e.g., air, water, or oil. Optionally, during supply, the pressurised fluid is heated with e.g. a heater or, alternatively, is cooled with e.g. a heat exchanger. An external mould block 24 of the mould 25, and/or the mould 25 itself, may also, or alternatively, be heated. A state of the moulded receptacle 22 after thermoforming is considerably more rigid, with more compressed side walls, compared with the state at demoulding from the porous mould 15.

A drying stage 29 (e.g. a microwave drying process or other drying process) is performed downstream of the thermoforming, as shown. In one example, the drying stage 29 is performed before thermoforming. However, moulding in the mould 25 requires some water content to assist with bonding during the compression process. Figure 1 illustrates a further drying stage 30 after the drying stage 29, which may utilise hot air circulated onto the moulded receptacle 22, e.g., in a "hot box". In some examples, microwave or other drying processes may be performed at plural stages of the overall manufacturing process.

The moulded receptacle 22 is then subjected to a coating stage during which, in this example, a spray lance 31 is inserted into the moulded receptacle 22 and applies one or more surface coatings to internal walls of the moulded receptacle 22. In another example, the moulded receptacle 22 is instead filled with a liquid that coats the internal walls of the moulded receptacle 22. In practice, such coatings provide a protective layer to prevent egress of contents into the bottle wall, which may permeate and/or weaken it. Coatings will be selected dependent on the intended contents of receptacle 22, e.g., a beverage, detergent, pharmaceutical product, etc. In some examples, the further drying stage 30 is performed after the coating stage (or both before and after the coating stage). In this example, the moulded receptacle 22 is then subjected to a curing process 34, which can be configured or optimised dependent on the coating, e.g., drying for twenty-four hours at ambient conditions or by a flash drying method. In some examples, e.g. where the further drying stage 30 occurs after the coating stage, the curing process 34 may be omitted.

At an appropriate stage of production (e.g., during thermoforming, or before or after coating) a closure or mouth forming process may be performed on the moulded receptacle 22. For example, as shown in Figure 1, a neck fitment 35 may be affixed. In some examples, an exterior coating is applied to the moulded receptacle 22, as shown in the further coating stage 32. In one example, the moulded receptacle 22 is dipped into a liquid that coats its outer surface, as shown in Figure 1. One or more further drying or curing processes may then be performed. For example, the moulded receptacle 22 may be allowed to dry in warm air. The moulded receptacle 22 may therefore be fully formed and ready to accept contents therein.

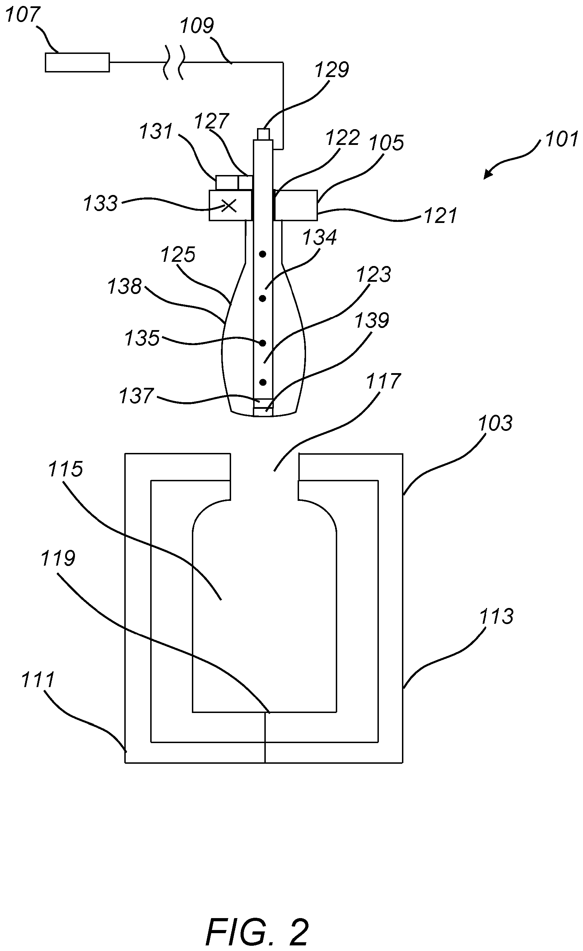

Figure 2 shows a mould system 101 which may be used to thermoform the self-supporting moulded receptacle 22 discussed above. The mould system 101 comprises a mould 103, a mandrel system 105, a pump 107 and a line 109.

The mould 103 comprises a first part 111 and a second part 113. In other examples, the mould 103 may comprise more than two parts. The two parts 111,113 are separable so as to open the mould 103. Each part comprises a cavity. When the two parts 111,113 are brought together to close the mould 103, a mould cavity 115 is created within the mould 103 that comprises the cavities of the first part 111 and the second part 113. In this particular example, the mould cavity 115 has the shape of a bottle and comprises a main body portion and a neck portion. The neck portion has a smaller diameter than the body portion and extends to the top of the mould 103. The mould 103 comprises an opening 117 to the mould cavity 115. Additionally, the mould cavity 115 comprises a base 119 opposite the opening 117. The base 119 is at a fixed distance from the opening 117, i.e., the base 119 does not move relative to the opening 117. This may provide a relatively robust and cheap mould compared to a mould with a base that is moveable relative to the opening.

The mandrel system 105 comprises a connector 121, a mandrel 123, an expandable member 125, a first actuator 127, a second actuator 129, a controller 131 and a control panel (not shown).

The connector 121 comprises a bore 122 that extends through the connector 121 from a top to a bottom of the connector 121. An annular seal is located within the bore 122 and provides a seal between the connector 121 and the mandrel 123, which extends through the bore 122. The seal is a low-friction seal and permits movement of the mandrel 123 relative to the connector 121. In this example, the connector 121 comprises a reference point 133. As described below in more detail, the mandrel 123 moves relative to the reference point 133 when inserting and withdrawing the mandrel 123 and expandable member 125 from the mould 102. In other examples, the reference point 133 may be comprised by other components of the mandrel system 105.

The mandrel 123 comprises a cylindrical tube 134 and a first part 137 of an attachment mechanism of the mandrel system 105. A plurality of holes 135 are formed along the length of the tube 134. The holes 135 are located along a lower portion of the tube 134 and extend radially through the tube 134 to allow fluid to flow from the interior of the mandrel 123 to the exterior of the mandrel 123. The first part 137 of the attachment mechanism comprises a magnet which is located at a lower end of the mandrel 123, i.e., the end of the mandrel 123 located within the expandable member 125. The mandrel 123 extends through the bore 122 in the connector 121 and into the expandable member 125 such that a lower portion of the mandrel 123 is located within the expandable member 125. In some examples, the mandrel 123 may be fully located inside the expandable member 125 and a different connector 121 may be used. The upper portion of the mandrel 123 is connected to the line 109. The mandrel 123 is free to move relative to the connector 121 and thus relative to the reference point 133. In particular, the mandrel 123 is free to move up and down within the bore 122, and to rotate within the bore 122 in the connector 121.

The expandable member 125 comprises an inflatable member in the form of an elastomeric bladder 138. The bladder 138 comprises a neck portion and a body portion. The neck portion is sealingly connected to the bottom of the connector 121. The neck portion has a smaller diameter than the body portion. In other examples, the bladder 138 may comprise a single portion of constant diameter. A second part 139 of the attachment mechanism comprises a metallic plate 139 formed of a ferromagnetic metal, such as iron. The metallic plate 139 is attached to the bottom of the bladder 138. The metallic plate 139 cooperates with the magnet 137 of the mandrel 123 to detachably attach the expandable member 125 to the mandrel 123.

The first actuator 127 is located on the connector 121 and is coupled to the mandrel 123. Operation of the first actuator 127 causes the mandrel 123 to move linearly, relative to the reference point 133, along the longitudinal axis of the mandrel 123. In this example, the first actuator 127 comprises an electric motor and a transmission (e.g., gears, friction wheel, and/or rack and pinion) for transmitting torque generated by the electric motor to the mandrel 123. In other examples, the first actuator 127 may comprise a hydraulic or pneumatic system for moving the mandrel 123 relative to the reference point 133.

The second actuator 129 is located at a top end of the mandrel 123 and is coupled to the mandrel 123. Operation of the second actuator 129 causes the mandrel 123 to rotate, relative to the reference point 133, about the longitudinal axis of the mandrel 123. In this example, the second actuator 129 comprises an electric motor and a transmission (e.g., gears, friction wheel, and/or rack and pinion) for transmitting torque generated by the electric motor to the mandrel 123. In other examples, the second actuator 129 may comprise a hydraulic or pneumatic system for rotating the mandrel 123 relative to the reference point 133.

In this example, the mandrel system 105 comprises separate actuators 127,129 for moving the mandrel 123 linearly and for rotating the mandrel 123. This then provides improved control over the linear and rotational movement of the mandrel 123, as well as enabling independent control over the rotation and linear movement. In other examples, the mandrel system 105 may comprise a single actuator that is operable to cause the mandrel 123 to move linearly and rotate simultaneously. In further examples, the actuator may comprise a single electric motor and one or more of the transmissions may be clutched. In this way, the benefits of independent control over linear and rotational movement of the mandrel may be achieved using a single electric motor. The controller 131 controls the operation of the actuators 127,129 and thereby the movement of the mandrel 123 relative to the reference point 133. The controller 131 also controls a robotic arm (not shown), which moves the connector 121 relative to the mould 103, and the pump 107.

The control panel (not shown) is connected to the controller 131 and is for receiving instructions and data relating to the mould 103 and the expandable member 125.

The pump 107 comprises a cylinder which displaces a fluid in the line 109. In some examples, the fluid is one of air, water or oil. As the line 109 is connected to the top of the mandrel 123, displacing the fluid causes the pump 107 to supply a pressurised fluid to the interior of the mandrel 123. The pressurised fluid then flows through the holes 135 in the tube 134 and into the expandable member 125. Thereby, the pump 107 is used to expand the expandable member 125. The pump 107 is also capable of operating in the opposite direction to withdraw the fluid from the expandable member 125 and thereby collapse and contract the expandable member 125.

Use of the mould system 101 will now be provided by way of Figure 3. As shown in Figure 3(a), the two parts 111,113 of the mould 103 are closed around a receptacle 22 such that the receptacle 22 is located inside the mould cavity 115. At this stage, the mandrel system 105 is located outside of the mould cavity 115. The magnet 137 is attached to the magnetic plate 139 which attaches the expandable member 125 to the end of the mandrel 123.

Turning now to Figure 3(b), the controller 131 controls the first actuator 127 to move the mandrel 123 down relative to the reference point 133. As the mandrel 123 moves down, the end of the mandrel 123 forces the bottom of the expandable member 125 down, which increases the length of the expandable member 125. This increase in length of the expandable member 125 results in a corresponding reduction in the width of the expandable member 125. Concurrently, the controller 131 operates the second actuator 129 to rotate the mandrel 123 relative to the reference point 133. Due to the expandable member 125 being attached to the end of the mandrel 123 by the attachment mechanism (i.e., magnet 137 and metallic plate 139), the rotation causes the expandable member 125 to twist around the mandrel 123. By twisting and elongating the expandable member 125, a greater reduction in the width of the expandable member 125 can be achieved than twisting or elongating alone.

The controller 131 then controls the actuators 127,129 to halt the downward motion and rotation of the mandrel 123. At this stage, the width of the expandable member 125 is no greater than the width of the opening 117 of the mould 103. Thereby, the mandrel 123 and expandable member 125 may pass through the opening 117 of the mould 103 without the expandable member 125 contacting the mould 103 or the receptacle 22. Beneficially, this may reduce the likelihood of the receptacle 22 being damaged by the expandable member 125 and the expandable member 125 being damaged by the mould 103.

Turning now to Figure 3(c), the controller 131 then controls the robotic arm to move the connector 121 down and towards the mould 103 until the connector 121 contacts and connects with the top of the mould 103 (which is shown in Figure 3(d)). As the connector 121 moves down, the mandrel 123 and the expandable member 125 are inserted into the mould cavity 115 through the opening 117. Due to the previous downward motion of the mandrel 123 relative to the connector 121 (discussed with reference to Figure 3(b)), the length of mandrel 123 is too great to fit within the mould cavity 115. Therefore, once a predetermined length of the mandrel 123 has been inserted into the mould cavity 115, the controller 131 operates the first actuator 127 to move the mandrel 123 up relative to the connector 121. This upward movement of the mandrel 123 occurs at the same time, and at the same rate of travel, as the connector 121 is moved down towards the mould 103. As a result, the position of the mandrel 123 within the mould appears stationary. The upward movement of the mandrel 123 relative to the connector 121 causes the length of the expandable member 125 to decrease and the width of the expandable member 125 to increase.

When the connector 121 contacts and connects to the top of the mould 103, the controller 131 controls the robotic arm to halt the downward movement of the connector 121. Additionally, the controller 131 controls the first actuator 127 to halt the upwards movement of the mandrel 123 relative to the connector 121. As shown in Figure 3(d), with the connector 121 connected to the top of the mould 103, the reference point 133 is at a fixed position relative to the mould 103. At this stage a clearance between the base 119 of the mould cavity 115 and the bottom of the expandable member 125 is dictated by the length of mandrel 123 which extends beneath the connector 121. The clearance is the minimum separation distance between the base 119 of the mould cavity and the expandable member 125 when the reference point 133 is at the fixed position relative to the mould 103. By varying the length of mandrel 123 which extends beneath the connector 121, the controller 131 can vary the clearance. The controller 131 controls the first actuator 127 (and therefore the length of mandrel 123 that extends beneath the connector 121) such that the clearance has a predetermined value. The bottom of the expandable member 125 may therefore be positioned appropriately relative to the base 119. This is discussed below in more detail.

The controller 131 then operates the second actuator 129 to rotate the mandrel 123 relative to the reference point 133 to untwist the expandable member 125 from around the mandrel 123. This then causes the width of the expandable member 125 to further increase.

With the expandable member 125 now positioned within the mould cavity 115, a forming operation is performed on the receptacle 22 (Figure 3(e)). The controller 131 controls the pump 107 to supply the pressurised fluid to the mandrel 123 which flows through the holes 135 in the mandrel 123 and into the expandable member 125 to expand the expandable member 125. The expansion of the expandable member 125 applies a force to the bottom of the expandable member 125 which overcomes the magnetic attraction between the magnet 137 and metallic plate 139, thereby causing the expandable member 125 to detach from the end of the mandrel 123. The expandable member 125 continues to expand within the receptacle. With sufficient expansion, the expandable member 125 contacts and compresses the receptacle 22 against the mould 103 to form the receptacle 22.

Turning now to Figure 3(f), once the forming operation is complete, the controller 131 controls the pump 107 to withdraw the pressurised fluid from the expandable member 125, which causes the expandable member 125 to collapse and contract. As the expandable member 125 contracts, the attraction between the magnet 137 and metallic plate 139 is sufficient to reattach the expandable member 125 to the end of the mandrel 123.

The controller 131 then controls the robotic arm to move the connector 121 upwards relative to the mould 103 (Figure 3(g)). Concurrently, the controller 131 controls the first actuator 127 to move the mandrel 123 downwards relative to the reference point 133 at the same rate that the connector 121 is moved upwards, such that the end of the mandrel 123 is stationary relative to the mould 103. Thereby, the length of the expandable member 125 is increased which results in the width of the expandable member 125 being decreased. The controller 131 also controls the second actuator 129 to rotate the mandrel 123 relative to the reference point 133 such that the expandable member 125 is twisted around the mandrel 123 to further decrease the width of the expandable member 125. With the expandable member 125 elongated and twisted around the mandrel 123, the controller 131 controls the actuators 127,129 to halt movement of the mandrel 123 relative to the reference point 133.

Turning now to Figure 3(h), the controller 131 controls the robotic arm to move the connector 121 upwards relative to the mould 103 to withdraw the mandrel 123 and expandable member 125 from the mould 103 via the opening 117. Once the mandrel 123 and expandable member 125 are withdrawn from the mould 103, the mould 103 is opened by separating the two parts 111,113 and the receptacle 22 removed for further processing. For example, the receptacle 22 may be dried in a drying stage 29, as described above with reference to Figure 1.

By moving the mandrel 123 and expandable member 125 relative to the reference point 133, the bottom of the expandable member 125 may be positioned appropriately relative to the base 119. If the bottom of the expandable member 125 is inappropriately positioned (for example, if the bottom is located too far from the base 119 of the mould) then, during expansion, the expandable member 125 may contact an upper part of a receptacle 22 before the expandable member 125 has filled a lower part of the receptacle 22. Further expansion of the expandable member 125 in a downward direction may then be inhibited by friction between the expandable member 125 and the upper part of the receptacle 22. Inhibited expansion may result in the expandable member 125 not fully filling the lower part of the receptacle 22. This may lead to an incorrect pressure being applied to the lower part of the receptacle 22 (for example, a base of the receptacle 22). Thereby, this part of the receptacle 22 may be insufficiently compacted leading to a weakness in the receptacle 22. Alternatively, inhibited expansion may result in the expandable member 125 stretching excessively to fully fill the lower part of the receptacle 22. Excessive stretching may reduce the uniformity of the pressure applied by the expandable member 125 to the receptacle 22. This reduction in uniformity may be detrimental to the quality of the receptacle 22, for example, resulting in weaknesses or variable thickness in the receptacle 22. Additionally, excessive stretching may fatigue the expandable member 125, thereby reducing the longevity of the expandable member 125, or lead to rupturing of the expandable member 125. Having a moveable mandrel 123 enables appropriate positioning of the expandable member 125 within the mould cavity 115. As a result, the quality of receptacles manufactured in the mould system 101 may be improved and/or the longevity of the expandable member 125 may be improved.

By moving the mandrel 123 relative to the connector 121 to vary the length of the expandable member 125 and thereby to vary the width of the expandable member 125, the width of the expandable member 125 may be varied to best suit the requirements of a manufacturing process which employs the mandrel system 105. For example, reducing the width of the expandable member 125 may be beneficial in facilitating passage of the expandable member 125 through the opening 117 of the mould 103 which occurs when the mandrel system 105 is inserted into, and subsequently withdrawn from, the mould 103. Reducing the width may enable the expandable member 125 to pass through the opening 117 without contacting the mould 103 and thereby damaging the expandable member 125. Additionally, reducing the width may reduce the likelihood of the expandable member 125 contacting and damaging the receptacle 22 during insertion and/or withdrawal. Increasing the width of the expandable member 125 may be beneficial during expansion of the expandable member 125 as the expandable member 125 may be able to expand relatively uninhibited by the mandrel 123. Uninhibited expansion of the expandable member 125 may improve the magnitude and uniformity of a pressure applied by the expandable member 125 to the receptacle 22 during the forming operation. Additionally, uninhibited expansion may reduce stress concentrations in the expandable member 125 which may damage or fatigue the expandable member 125 and thereby the longevity of the expandable member 125 may be improved. Additionally, increasing the length of the expandable member 125 may place the expandable member 125 under tension which may reduce the amount of slack in the expandable member 125. Thereby, the expandable member 125 may be less likely to contact and damage the receptacle 22 during insertion and/or withdrawal.

In the above example, the end of the mandrel 123 is detachably attached to the expandable member 125. As a result, the end of the mandrel 123 may be attached or detached from the expandable member 125 during different stages of the manufacturing process. For example, when attached to the mandrel 123, the expandable member 125 may be more easily positioned and moved. This may be beneficial for positioning the expandable member 125 within the mould 103 prior to expansion, and/or during insertion or withdrawal of the expandable member 125 from the mould 103. When detached from the mandrel 123, the expandable member 125 may expand uninhibited by the mandrel 123. Uninhibited expansion of the expandable member 125 may improve the magnitude and uniformity of the pressure applied by the expandable member 125 to the receptacle 22 within the mould 103. Thereby, the quality of the receptacle 22 may be improved due to improved compaction which may result from the improved magnitude and uniformity of the pressure applied. Additionally, uninhibited expansion may reduce stress concentrations in the expandable member 125 which may damage or fatigue the expandable member 125. Thereby, the longevity of the expandable member 125 may be improved.

In the above example, the clearance between the bottom of the expandable member and the base of the mould, following insertion but prior to expansion, has a predetermined value of 8 mm. However, other values for the clearance may be used. As discussed previously, as the clearance between the bottom of the expandable member and the base of the mound decreases, the likelihood of downward expansion of the expandable member 125 being inhibited is reduced. This may reduce the likelihood of insufficient compaction leading to a weakness in the receptacle 22 and/or excessive stretching of the expandable member 125 leading to fatigue of the expandable member 125. However, as the clearance decreases, the likelihood of suboptimal expansion of the expandable member 125 occuring increases. Specifically, the expandable member 125 may prematurely contact the base of the receptacle 22, which may inhibit the subsequent expansion of the expandable member 125 outwards into the corners of the receptacle 22. This may reduce the quality of the receptacle 22 and/or reduce the longevity of the expandable member 125, as also described above. A good balance between the competing needs of reducing the likelihood of inhibited downward expansion and reducing the likelihood of suboptimal expansion may be provided by a clearance of no greater than 11 mm and no less than 2 mm.

Although a user may manually input a required clearance (for example, via the control panel), in this example the controller 131 is configured to select or determine a predetermined clearance based on a characteristic of the mould 103 and a characteristic of the expandable member 125. In examples, the controller 131 receives a characteristic of the mould 103 and a characteristic of the expandable member 125 via the control panel. The controller 131 then selects a predetermined clearance from a lookup table, indexed using the received characteristic of the mould 103 and the received characteristic of the expandable member 125. Thereby an operator is not required to calculate a new clearance should a different mould or a different expandable member be used. Thereby, the downtime incurred when switching between moulds may be reduced. The lookup table may have been previously generated through experimentation and process modelling to determine the optimum predetermined value for different characteristics. The characteristic of the mould 103 may be one of a height, a width and a geometry of the mould 103. The characteristic of the expandable member 125 may be one of a height, a width, a geometry and an elasticity of the expandable member 125.

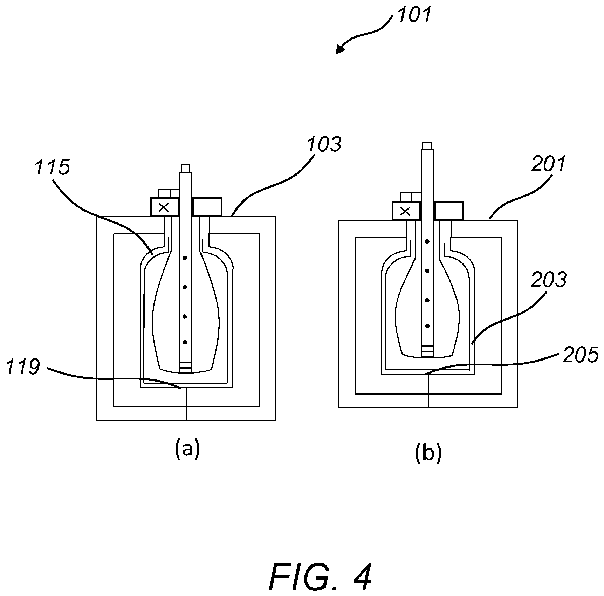

Turning now to Figure 4, the mould system 101 further comprises a further mould 201. The further mould 201 comprises a further mould cavity 203 which has a different geometry to that of the mould cavity 115. Specifically, the height of the further mould cavity 203 is less than that of the mould cavity 115. As a result, the mould system 101 may be used to form a range of receptacle sizes. Irrespective of the geometry of the mould cavities 115,203, the controller 131 moves the mandrel 123 and the expandable member 125 such that the clearance between the bottom of the expandable member 125 and the bases 119,205 of the mould cavities 115,203 is the same predetermined value. As a result, the expandable member 125 may be appropriately positioned for each mould 103,201 without requiring a bespoke mandrel and expandable member for each mould 103,201. This may reduce the cost of the mould system 101 as well as reduce processing times by removing the need to switch the mandrel 123 and expandable member 125 when switching moulds 103,201.

In the above examples, the first part 137 of the attachment mechanism comprises a magnet 137 and the second part 139 of the attachment mechanism comprises a magnetically-attractable element in the form of a metallic plate 139. Equally, in other examples, the first part 137 and the second part 139 may comprise a plug and a socket, or a clamp and a clampable structure. Indeed, it is conceivable that the attachment mechanism is a single part located on either the mandrel 123 or the expandable member 125, for example, a clamp on the mandrel 123 which clamps a portion of the expandable member 125.

In the above examples, the connector 121 contacts and connects to the top of the mould 103. However, in other examples the connector 121 may not contact and connect to the top of the mould 103. Instead, the connector 121 may be moved downward until the connector 121 is at a prescribed location above the top of the mould 103, with the mandrel 123 and the expandable member 125 extending into the mould 103. In this example, the reference point 133 is at a fixed position relative to mould 103 when the connector 121 is at the prescribed location.

In the above example, the movement of the connector 121 and mandrel 123 are controlled by the controller 131. However, it is conceivable that an operator could manually control the movement. However, employing a controller may improve overall product quality and may result in reduced processing times and increased throughput.

In the above example the mandrel 123 and the expandable member 125 of the mandrel system 105 are inserted into and withdrawn from the mould cavity 115 through the opening 117. It will be appreciated that the whole mandrel system 105 need not be inserted. Therefore, by inserted it is meant that at least a part of the mandrel system 105 is inserted.

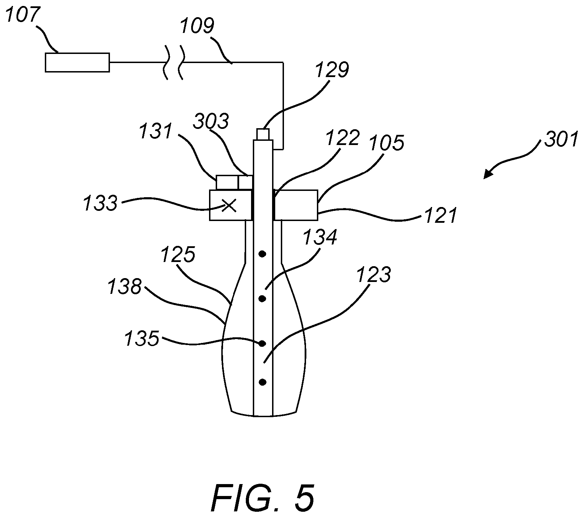

In the above example, the mandrel system 123 comprises an attachment mechanism 137,139 for detachably attaching the expandable member 125 to the mandrel 123. However, in other examples, the attachment mechanism may be omitted. For example, Figure 5 shows an example of a mandrel system 301 where the expandable member 125 is fixedly attached to the mandrel 123. The mandrel system 301 is identical to the mandrel system of Figure 2, but with the following differences.

The attachment mechanism 137,139 is omitted and the bottom of the body portion of the expandable member 125 is fixedly attached to the lower end of the mandrel 123.

The first actuator 303 is operable in a first mode and a second mode. In the first mode, the first actuator 303 causes the mandrel 123 to move linearly, relative to the reference point 133, along the longitudinal axis of the mandrel 123. In the second mode, the first actuator 303 permits the mandrel 123 to move freely relative to the reference point 133. For example, the first actuator 303 may be decoupled from the mandrel 123 (e.g., using a clutch) in the second mode to permit the mandrel 123 to move freely. In another example, the first actuator 303 may be set to an idle mode in which the first actuator 303 remains coupled to the mandrel 123 but provides little to no resistance to the movement of the mandrel 123. In examples where the first actuator 303 comprises a hydraulic system, the hydraulic system may be vented to atmosphere in idle mode.

Turning now to Figure 6, the mandrel system 301 operates in an identical way to the mandrel system of Figure 2, but with the following differences.

The expandable member 123 remains attached to the mandrel 125 during all stages of operation. The controller 131 operates the first actuator 127 in the first mode to move the mandrel 123 up and down relative to the reference point 133.

To perform the forming operation on the receptacle 22 (Figure 6(e)), the controller 131 controls the pump 107 to supply the pressurised fluid to the mandrel 123 which flows through the holes 135 in the mandrel 123 and into the expandable member 125 to expand the expandable member 125. Concurrently, the controller 131 operates the first actuator 303 in the second mode of operation, which permits the mandrel 123 to move freely relative to the reference point 133. As a result, the mandrel 123 does not inhibit the expansion of the expandable member 125. The expansion of the expandable member 125 causes the mandrel 123 to move down towards the base 119 of the mould 103. The expandable member 125 continues to expand within the receptacle 22. With sufficient expansion, the expandable member 125 contacts and compresses the receptacle 22 against the mould 103 to form the receptacle 22.

Turning now to Figure 6(f), once the forming operation is complete, the controller 131 controls the pump 107 to withdraw the pressurised fluid from the expandable member 125, which causes the expandable member 125 to collapse and contract. The first actuator 303 continues to operate in the second mode. Consequently, as the expandable member 125 contracts, the mandrel 123 moves upward together with the bottom of the expandable member 125.

In the example of Figure 5, the mandrel 123 is moveable relative to the connector 121 in response to expansion of the expandable member 125. As a result, the expandable member 125 may expand relatively uninhibited by the mandrel 123 whilst also being attached to the mandrel 123. Being attached to the mandrel 123 may beneficially enable the mandrel 123 to manipulate the expandable member 125, which may improve the functionality of the mandrel system 301.

In the example of Figure 5, when operating in the second mode, the first actuator 303 permits the mandrel 123 to move freely relative to the reference point 133. However, in other examples, when operating in the second mode, the first actuator 303 may instead actively move the mandrel 125 in response to expansion of the expandable member 125. Specifically, during expansion of the expandable member 125, the first actuator 303 may move the mandrel 123 down towards the base 119 of the mould 103, possibly at a rate which matches the expansion of the detached expandable member 125 of Figure 3(e). During the subsequent collapse of the expandable member 125, the first actuator 303 may move the mandrel 123 up away from the base 119 of the mould 103, thereby causing the expandable member 125 to collapse.

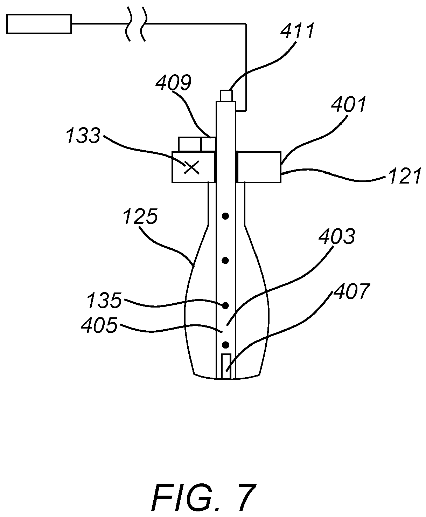

In the example of Figure 5, the mandrel 125 is unitary, which may provide a relatively simple and robust mandrel. However, in other examples, the mandrel may be a multi-part mandrel. For example, Figure 7 shows an example of a mandrel system 401 comprising a two-part mandrel 403. The mandrel system 401 is identical to the mandrel system 105 of Figure 5, but with the following differences.

The mandrel 403 comprises a first part 405 and a second part 407. The first part 405 has the form of a cylindrical tube and comprises a plurality of holes 135 formed along the length of the first part 405. The holes 135 are located along the lower portion of the first part 405 and extend radially through the first part 405 to allow fluid to flow from the interior of the mandrel 403 to the exterior of the mandrel 403.

The second part 405 has a cylindrical shape and has a smaller outer diameter than the inner diameter of the first part 409. The second part 407 is located inside the first part 405 at the lower end of the first part 405. An end of the second part 407 is attached to the body portion of the expandable member 125. The second part 407 is keyed to the first part 405 such that the second part 407 moves linearly relative to the first part 405 but is prevented from rotating relative to the first part 405. For example, the first part 405 may comprise a channel which extends parallel to a longitudinal axis of the first part 405, and the second part 407 may comprise a projection which is received within the channel. The second part 407 moves along the longitudinal axis of the first part 405 between a contracted position and an extended position. The length of the mandrel 403 is greater in the extended position than in the contracted position.

The first and second actuators 409, 411 are similar to the actuators 303, 129 of Figure 5 except that the first actuator 409 only operates in the first mode. The actuators 409, 411 are each coupled to the first part 405 of the mandrel. The first actuator 409 is operable to cause the first part 405 of the mandrel 403 to move linearly, relative to the connector 121 and the reference point 133, along the longitudinal axis of the mandrel 403. The second actuator 411 is operable to cause the first part 405 of the mandrel 403 to rotate relative to the connector 121 and the reference point 133. Since the first part 405 is keyed to the second part 407 of the mandrel 403, rotation of the first part 405 causes the second part 407 to also rotate.

Turning now to Figure 8, the mandrel system 401 operates in an identical to the mandrel system of Figure 5, but with the following differences.

As shown in Figure 8(a), operation of the mandrel system 401 commences with the two parts 111,113 of the mould 103 being closed around a receptacle 22, such that the receptacle 22 is located inside the mould cavity 115. At this stage, the mandrel system 401 is located outside of the mould cavity 115 and the expandable member 125 is in a collapsed state. In the collapsed state, the length of the mandrel 403 which extends beneath the connector 121 is the same as the natural (unstretched) length of the expandable member 125. Thereby, when the expandable member 125 is in the collapsed state, the second part 407 of the mandrel 403 is biased towards the contracted position by the expandable member 125. Specifically, the elasticity of the expandable member 125 biases the second part 407 towards the contracted position.

To perform the forming operation on the receptacle 22 (Figure 8(e)), the controller 131 controls the pump 107 to supply the pressurised fluid to the mandrel 403 which flows through the holes 135 in the mandrel 403 and into the expandable member 125 to expand the expandable member 125. As the expandable member 125 expands, the bottom of the expandable member 125 moves down towards the base 119 of the mould 103. The downward motion of the bottom of the expandable member 125 results in the second part 407 of the mandrel 403 moving from the contracted position to the extended position. The expandable member 125 continues to expand within the receptacle 22. With sufficient expansion, the expandable member 125 then contacts the receptacle 22 and applies pressure to compresses the receptacle 22 against the mould 103 to form the receptacle 22.

Turning now to Figure 8(f), once the forming operation is complete, the controller 131 controls the pump 107 to withdraw the pressurised fluid from the expandable member 125, which causes the expandable member 125 to collapse and contract. As the expandable member 125 contracts, the bottom of the expandable member 125 moves upward away from the base 119 of the mould 103. This upward motion of the bottom of the expandable member 125 results in the second part 407 of the mandrel 403 moving from the extended to the contracted position.

In the example of Figure 7, the expandable member 125 is attached to the second part 407 of the mandrel 403, and the second part 407 moves relative to the first part 405 in response to expansion of the expandable member 125. As a result, the above-mentioned benefits of the expandable member 125 expanding relatively uninhibited whilst also being attached to the mandrel 403 may be achieved. Additionally, providing a two-part mandrel 403 may provide a convenient means of enabling the end of the mandrel 403 to move relative to the connector 121 in response to expansion of the expandable member.

In the example of Figure 7, the first part 405 of the mandrel 403 is moveable relative to the connector 121. However, it is conceivable that in other examples the first part 405 of the mandrel 403 is fixedly attached to the connector 121 and thereby immoveable relative to the reference point 133. In this example, the connector 121 and the first part 405 are moved together during insertion and withdrawal of the mandrel 403 and expandable member 125. During expansion and collapse of the expandable member 125, the second part 407 of the mandrel 403 is still able to move relative to the first part 405 of the mandrel 403 and thereby the expansion and collapse of the expandable member 125 continue to be uninhibited by the mandrel 403.

In the above examples the movement of the mandrel 123 relative to the reference point 133 causes the length and thereby the width of the expandable member 125 to vary. However, it is conceivable that in other examples movement of the mandrel 123 relative to the reference point 133 may not cause the length and thereby the width of the expandable member 125 to vary. Instead, the movement may only cause the clearance between the bottom of the expandable member 125 and the base 119 of the mould 103 to vary. For example, the top of the expandable member 125 may be sealingly connected to the mandrel 123 instead of to the connector 121. Thereby, as the mandrel 123 moves up and down relative to the reference point 133, the expandable member 125 also moves up and down with the mandrel 123 and the length, and thereby the width, of the expandable member 125 is unchanged. This arrangement may achieve the above-mentioned benefit of appropriately positioning the expandable member 125 but may not realise the above-mentioned benefits of varying the width of the expandable member 125 to suit the requirements of the manufacturing process. Additionally, this arrangement may have other benefits, such as simplifying the sealing of the expandable member 125. Specifically, in this arrangement, the annular seal which permits movement of the mandrel 125 relative to the connector 121 may be omitted and instead a simpler seal which does not need to permit significant movement may be used to sealingly connect the expandable member 125 to the mandrel 123.

It will be appreciated that varying the length of the mandrel 123 which extends beneath the connector 121 also varies the distance 200 (shown in Figure 3a) between the lower end of the mandrel 123 (which in the example of Figure 3a is the first part 137 of the attachment mechanism) and the reference point 133.

In the above examples, the controller 131 is configured to select or determine a predetermined clearance based on a characteristic of the mould 103, and the controller 131 selects a predetermined clearance from a lookup table, indexed using the received characteristic of the mould 103. As discussed above, the clearance is dictated by the distance 200. Therefore, in some examples, the controller 131 is configured to select or determine a predetermined distance 200 based on a characteristic of the mould 103 and the controller 131 selects a predetermined distance 200 from a lookup table, indexed using the received characteristic of the mould 103.

## Claims

1. A mould system (101) for moulding a receptacle (22), the mould system comprising:
a mould (103) comprising a mould cavity (115) and an opening (117); and
a mandrel system (105) comprising a reference point (133), a mandrel (123) and an expandable member (125),
wherein:
the mandrel is at least partially located, or at least partially locatable, inside the expandable member and comprises one or more holes (135) through which a fluid is flowable in use from an interior of the mandrel to an exterior of the mandrel to expand the expandable member;
when the mandrel is at least partially located inside the expandable member, the mandrel system is positionable relative to the mould such that the reference point is at a fixed position relative to the mould and the mandrel and the expandable member extend into the mould cavity through the opening such that there is a clearance between the expandable member and a base of the mould cavity opposite the opening;
the expandable member and at least a part of the mandrel are moveable relative to the reference point to vary the clearance; and
the mandrel system comprises a controller (131) configured to cause movement of the expandable member and the at least a part of the mandrel relative to the reference point.

2. The mould system of claim 1, wherein the mandrel system comprises a connector (121) for connecting the mandrel system to the mould, and the reference point is comprised by the connector.

3. The mould system of claim 1 or 2, wherein the controller is configured to cause movement of the expandable member and the at least a part of the mandrel relative to the reference point such that the clearance has a predetermined value, and optionally wherein the predetermined value is at least one of: no less than 4 mm and no greater than 11 mm.

4. The mould system of claim 3, wherein the controller is configured to determine the predetermined value based on a characteristic of the mould; and optionally wherein:
the controller stores a lookup table of different predetermined values associated with respective different mould characteristics; and
the controller is configured to select the predetermined value from the lookup table using the characteristic of the mould.

5. The mould system of any one of claims 1 to 4, wherein an end of the mandrel is attachable, or attached, to the expandable member.

6. The mould system of claim 5, wherein,
when the end of the mandrel is attached to the expandable member, the end of the mandrel is moveable relative to the reference point in response to expansion of the expandable member.

7. The mould system of claim 5, wherein the expandable member is arranged to detach from the end of the mandrel in response to expansion of the expandable member.

8. The mould system of any one of claims 1 to 7, wherein the mandrel and the expandable member are moveable relative to the reference point to vary a width of the expandable member.

9. The mould system of any one of claims 1 to 8, wherein:
the mould system comprises a further mould (201);
the further mould comprises a further mould cavity (203) and a further opening;
the further mould cavity has a different geometry to a geometry of the mould cavity;
when the mandrel is at least partially located inside the expandable member, the mandrel system is positionable relative to the further mould such that the reference point is at a fixed position relative to the further mould, and the mandrel and the expandable member extend into the further mould cavity through the further opening such that there is a further clearance between the expandable member and a base of the further mould cavity opposite the further opening;
the mandrel and the expandable member are moveable relative to the reference point to vary the further clearance; and
the mandrel system comprises a controller configured to cause movement of the mandrel and expandable member relative to the reference point such that the clearance and the further clearance have the same value.

10. A method of moulding a receptacle, the method comprising:
providing the mould system of any one of claims 1 to 9;
when the mandrel is at least partially located inside the expandable member, moving the expandable member and the at least a part of the mandrel relative to the reference point to vary the clearance; and
positioning the mandrel system relative to the mould such that the reference point is at the fixed position relative to the mould, and the mandrel and the expandable member extend into the mould cavity through the opening.

11. The method of claim 10, wherein the mandrel system comprises a connector, the connector comprises the reference point, and the positioning the mandrel system comprises connecting the connector to the mould.

12. The method of claim 10 or claim 11, wherein the moving comprises moving the expandable member and the at least a part of the mandrel relative to the reference point such that the clearance has a predetermined value; and optionally , the method comprises determining the predetermined value based on a characteristic of the mould; and optionally the determining the predetermined value comprises:
selecting the predetermined value, from a lookup table of different predetermined values associated with respective different mould characteristics, using the characteristic of the mould.

13. The method of any one of claims 10 to 12, wherein the method comprises at least one of: detaching an end of the mandrel from the expandable member, and attaching the end of the mandrel to the expandable member.

14. The method of claim 13, wherein the method comprises:
expanding the expandable member to apply a forming operation to a receptacle located within the mould cavity; and
detaching the end of the mandrel from the expandable member during the expanding of the expandable member, and optionally
wherein the moving the expandable member and the at least a part of the mandrel relative to the reference point causes a width of the expandable member to vary.

15. The method of any one of claims 10 to 14, wherein the method comprises:
locating a receptacle in the mould, the receptacle being formed, at least partially, of paper pulp; and
expanding the expandable member to apply a forming operation to the receptacle; and/or
expanding the expandable member as part of a thermoforming operation to a receptacle located within the mould cavity.

## Patentansprüche

1. Formsystem (101) zum Formen eines Behälters (22), wobei das Formsystem Folgendes umfasst:
eine Form (103), umfassend einen Formhohlraum (115) und eine Öffnung (117); und
ein Dornsystem (105), umfassend einen Bezugspunkt (133), einen Dorn (123) und ein aufweitbares Element (125),
wobei:
der Dorn mindestens teilweise innen in dem aufweitbaren Element lokalisiert ist oder mindestens teilweise darin lokalisierbar ist und ein oder mehrere Löcher (135) umfasst, durch die während einer Verwendung ein Fluid von einem Inneren des Dorns zu einem Äußeren des Dorns fließbar ist, um das aufweitbare Element aufzuweiten;
wenn der Dorn mindestens teilweise innen in dem aufweitbaren Element lokalisiert ist, das Dornsystem relativ zu der Form derart positionierbar ist, dass der Bezugspunkt in einer festen Position relativ zu der Form ist und sich der Dorn und das aufweitbare Element durch die Öffnung derart in den Formhohlraum erstrecken, dass es einen Abstand zwischen dem aufweitbaren Element und einem der Öffnung gegenüberliegenden Boden des Formhohlraums gibt;
das aufweitbare Element und mindestens ein Teil des Dorns relativ zu dem Bezugspunkt beweglich sind, um den Abstand zu variieren; und
das Dornsystem eine Steuerung (131) umfasst, die dazu konfiguriert ist, eine Bewegung des aufweitbaren Elements und des mindestens einen Teils des Dorns relativ zu dem Referenzpunkt zu bewirken.

2. Formsystem nach Anspruch 1, wobei das Dornsystem einen Verbinder (121) zum Verbinden des Dornsystems mit der Form umfasst und der Bezugspunkt in dem Verbinder enthalten ist.

3. Formsystem nach Anspruch 1 oder 2, wobei die Steuerung dazu konfiguriert ist, eine derartige Bewegung des aufweitbaren Elements und des mindestens einen Teils des Dorns relativ zu dem Referenzpunkt zu bewirken, dass der Abstand einen vorbestimmten Wert aufweist, und wobei der vorbestimmte Wert mindestens eines von Folgendem ist: nicht weniger als 4 mm und nicht größer als 11 mm.

4. Formsystem nach Anspruch 3, wobei die Steuerung dazu konfiguriert ist, den vorbestimmten Wert basierend auf einem Merkmal der Form zu bestimmen; und wobei optional:
die Steuerung eine Nachschlagetabelle verschiedener vorbestimmter Werte speichert, die mit jeweiligen verschiedenen Formmerkmalen verknüpft sind; und
die Steuerung dazu konfiguriert ist, mithilfe des Merkmals der Form den vorbestimmten Wert aus der Nachschlagetabelle auszuwählen.

5. Formsystem nach einem der Ansprüche 1 bis 4, wobei ein Ende des Dorns an dem aufweitbaren Element befestigbar oder befestigt ist.

6. Formsystem nach Anspruch 5, wobei,
wenn das Ende des Dorns an dem aufweitbaren Element befestigt ist, das Ende des Dorns als Reaktion auf eine Aufweitung des aufweitbaren Elements relativ zu dem Bezugspunkt beweglich ist.

7. Formsystem nach Anspruch 5, wobei das aufweitbare Element angeordnet ist, um sich als Reaktion auf eine Aufweitung des aufweitbaren Elements von dem Ende des Dorns zu lösen.

8. Formsystem nach einem der Ansprüche 1 bis 7, wobei der Dorn und das aufweitbare Element relativ zu dem Bezugspunkt beweglich sind, um eine Breite des aufweitbaren Elements zu variieren.

9. Formsystem nach einem der Ansprüche 1 bis 8, wobei:
das Formsystem ferner eine weitere Form (201) umfasst;
die weitere Form einen weiteren Formhohlraum (203) und eine weitere Öffnung umfasst;
der weitere Formhohlraum eine zu einer Geometrie des Formhohlraums verschiedene Geometrie aufweist;
wenn der Dorn mindestens teilweise innen in dem aufweitbaren Element lokalisiert ist, das Dornsystem relativ zu der weiteren Form derart positionierbar ist, dass der Bezugspunkt in einer festen Position relativ zu der weiteren Form ist und sich der Dorn und das aufweitbare Element durch die weitere Öffnung derart in den weiteren Formhohlraum erstrecken, dass es einen weiteren Abstand zwischen dem aufweitbaren Element und einem der weiteren Öffnung gegenüberliegenden Boden des weiteren Formhohlraums gibt;
der Dorn und das aufweitbare Element relativ zu dem Bezugspunkt beweglich sind, um den weiteren Abstand zu variieren; und
das Dornsystem eine Steuerung, die dazu konfiguriert ist, eine derartige Bewegung des Dorns und des aufweitbaren Elements relativ zu dem Referenzpunkt zu bewirken, dass der Abstand und der weitere Abstand denselben Wert aufweisen.

10. Verfahren zum Formen eines Behälters, wobei das Verfahren Folgendes umfasst:
Bereitstellen des Formsystems nach einem der Ansprüche 1 bis 9; wenn der Dorn mindestens teilweise innerhalb des aufweitbaren Elements lokalisiert ist, Bewegen des aufweitbaren Elements und des mindestens einen Teils des Dorns relativ zu dem Referenzpunkt, um den Abstand zu variieren; und
derartiges Positionieren des Dornsystems relativ zu der Form, dass der Bezugspunkt in der festen Position relativ zu der Form ist und sich der Dorn und das aufweitbare Element durch die Öffnung in den Formhohlraum erstrecken.

11. Verfahren nach Anspruch 10, wobei das Dornsystem einen Verbinder umfasst, der Verbinder den Referenzpunkt umfasst und das Positionieren des Dornsystems ein Verbinden des Verbinders mit der Form umfasst.

12. Verfahren nach Anspruch 10 oder Anspruch 11, wobei das Bewegen ein derartiges Bewegen des aufweitbaren Elements und des mindestens einen Teils des Dorns relativ zu dem Bezugspunkt umfasst, dass der Abstand einen vorbestimmten Wert aufweist; und das Verfahren optional ein Bestimmen des vorbestimmten Wertes basierend auf einem Merkmal der Form umfasst; und das Bestimmen des vorbestimmten Wertes optional Folgendes umfasst:
Auswählen des vorbestimmten Wertes aus einer Nachschlagetabelle verschiedener vorbestimmter Werte, die mit jeweiligen verschiedenen Formmerkmalen verknüpft sind, mithilfe des Merkmals der Form.

13. Verfahren nach einem der Ansprüche 10 bis 12, wobei das Verfahren mindestens eines von Folgendem umfasst: Lösen eines Endes des Dorns von dem aufweitbaren Element und Befestigen des Endes des Dorns an dem aufweitbaren Element.

14. Verfahren nach Anspruch 13, wobei das Verfahren Folgendes umfasst:
Aufweiten des aufweitbaren Elements, um einen Formungsvorgang an einem innerhalb des Formhohlraums lokalisierten Behälter anzuwenden; und
Lösen des Endes des Dorns von dem aufweitbaren Element während des Aufweitens des aufweitbaren Elements und optional
wobei das Bewegen des aufweitbaren Elements und des mindestens einen Teils des Dorns relativ zu dem Referenzpunkt bewirkt, dass eine Breite des aufweitbaren Elements variiert.

15. Verfahren nach einem der Ansprüche 10 bis 14, wobei das Verfahren Folgendes umfasst:
Lokalisieren eines Behälters in der Form, wobei der Behälter mindestens teilweise aus Papiermasse ausgebildet ist; und
Aufweiten des aufweitbaren Elements, um einen Formungsvorgang an dem Behälter anzuwenden; und/oder
Aufweiten des aufweitbaren Elements als Teil eines Thermoformungsvorgangs an einem innerhalb des Formhohlraums lokalisierten Behälter.

## Revendications

1. Système de moule (101) pour mouler un réceptacle (22), le système de moule comprenant :
un moule (103) comprenant une cavité de moule (115) et une ouverture (117) ; et
un système de mandrin (105) comprenant un point de référence (133), un mandrin (123) et un élément expansible (125),
dans lequel :
le mandrin est au moins partiellement localisé, ou au moins partiellement localisable, à l'intérieur de l'élément expansible et comprend un ou plusieurs trous (135) à travers lesquels un fluide peut s'écouler en cours d'utilisation d'un intérieur du mandrin vers un extérieur du mandrin pour dilater l'élément expansible ;
lorsque le mandrin est au moins partiellement localisé à l'intérieur de l'élément expansible, le système de mandrin peut être positionné par rapport au moule de telle sorte que le point de référence est dans une position fixe par rapport au moule et le mandrin et l'élément expansible s'étendent dans la cavité de moule à travers l'ouverture de telle sorte qu'il y a un jeu entre l'élément expansible et une base de la cavité de moule opposée à l'ouverture ;
l'élément expansible et au moins une partie du mandrin peuvent être déplacés par rapport au point de référence pour faire varier le jeu ; et
le système de mandrin comprend un dispositif de commande (131) configuré pour provoquer le déplacement de l'élément expansible et de l'au moins une partie du mandrin par rapport au point de référence.

2. Système de moule selon la revendication 1, dans lequel le système de mandrin comprend un raccord (121) pour raccorder le système de mandrin au moule, et le point de référence est constitué par le raccord.

3. Système de moule selon la revendication 1 ou 2, dans lequel le dispositif de commande est configuré pour provoquer le déplacement de l'élément expansible et d'au moins une partie du mandrin par rapport au point de référence de telle sorte que le jeu a une valeur prédéterminée, et éventuellement dans lequel la valeur prédéterminée est au moins l'une de : pas moins de 4 mm et pas plus de 11 mm.

4. Système de moule selon la revendication 3, dans lequel le dispositif de commande est configuré pour déterminer la valeur prédéterminée en fonction d'une caractéristique du moule ; et, éventuellement dans lequel :
le dispositif de commande stocke une table de consultation de différentes valeurs prédéterminées associées aux caractéristiques de moule différentes respectives ; et
le dispositif de commande est configuré pour sélectionner la valeur prédéterminée dans la table de consultation en utilisant la caractéristique du moule.

5. Système de moule selon l'une quelconque des revendications 1 à 4, dans lequel une extrémité du mandrin peut être fixée, ou est fixée, à l'élément expansible.

6. Système de moule selon la revendication 5, dans lequel,
lorsque l'extrémité du mandrin est fixée à l'élément expansible, l'extrémité du mandrin peut se déplacer par rapport au point de référence en réponse à l'expansion de l'élément expansible.

7. Système de moule selon la revendication 5, dans lequel l'élément expansible est conçu pour se détacher de l'extrémité du mandrin en réponse à l'expansion de l'élément expansible.

8. Système de moule selon l'une quelconque des revendications 1 à 7, dans lequel le mandrin et l'élément expansible peuvent être déplacés par rapport au point de référence pour faire varier une largeur de l'élément expansible.

9. Système de moule selon l'une quelconque des revendications 1 à 8, dans lequel :
le système de moule comprend un moule supplémentaire (201) ;
le moule supplémentaire comprend une cavité de moule supplémentaire (203) et une ouverture supplémentaire ;
la cavité de moule supplémentaire a une géométrie différente de celle de la cavité de moule ;
lorsque le mandrin est au moins partiellement localisé à l'intérieur de l'élément expansible, le système de mandrin peut être positionné par rapport au moule supplémentaire de telle sorte que le point de référence est dans une position fixe par rapport au moule supplémentaire et le mandrin et l'élément expansible s'étendent dans la cavité de moule supplémentaire à travers l'ouverture supplémentaire de telle sorte qu'il y a un jeu supplémentaire entre l'élément expansible et une base de la cavité de moule supplémentaire opposée à l'ouverture supplémentaire ;
le mandrin et l'élément expansible peuvent être déplacés par rapport au point de référence pour faire varier le jeu supplémentaire ; et
le système de mandrin comprend un dispositif de commande configuré pour provoquer le déplacement du mandrin et de l'élément expansible par rapport au point de référence de telle sorte que le jeu et le jeu supplémentaire ont la même valeur.

10. Procédé de moulage d'un réceptacle, le procédé comprenant :
la fourniture du système de moule selon l'une quelconque des revendications 1 à 9 ;
lorsque le mandrin est au moins partiellement localisé à l'intérieur de l'élément expansible, le déplacement de l'élément expansible et de l'au moins une partie du mandrin par rapport au point de référence pour faire varier le jeu ; et
le positionnement du système de mandrin par rapport au moule de telle sorte que le point de référence est à la position fixe par rapport au moule, et le mandrin et l'élément extensible s'étendent dans la cavité de moule à travers l'ouverture.

11. Procédé selon la revendication 10, dans lequel le système de mandrin comprend un raccord, le raccord comprend le point de référence et le positionnement du système de mandrin comprend le raccordement du raccord au moule.

12. Procédé selon la revendication 10 ou 11, dans lequel le déplacement comprend le déplacement de l'élément expansible et de l'au moins une partie du mandrin par rapport au point de référence de telle sorte que le jeu a une valeur prédéterminée ; et, éventuellement, le procédé comprend la détermination de la valeur prédéterminée en fonction d'une caractéristique du moule ; et, éventuellement, la détermination de la valeur prédéterminée comprend :
la sélection de la valeur prédéterminée, à partir d'une table de consultation de différentes valeurs prédéterminées associées à différentes caractéristiques de moule respectives, en utilisant la caractéristique du moule.

13. Procédé selon l'une quelconque des revendications 10 à 12, dans lequel le procédé comprend au moins l'un de : détacher une extrémité du mandrin de l'élément expansible, et fixer l'extrémité du mandrin à l'élément expansible.

14. Procédé selon la revendication 13, dans lequel le procédé comprend :
l'expansion de l'élément extensible pour appliquer une opération de formage à un réceptacle localisé au sein de la cavité de moule ; et
le détachement de l'extrémité du mandrin de l'élément expansible pendant l'expansion de l'élément expansible, et éventuellement dans lequel le déplacement de l'élément expansible et de l'au moins une partir du mandrin par rapport au point de référence amène une largeur de l'élément expansible à varier.

15. Procédé selon l'une quelconque des revendications 10 à 14, dans lequel le procédé comprend :
la localisation d'un réceptacle dans le moule, le réceptacle étant formé, au moins partiellement, de pâte à papier ; et
l'expansion de l'élément expansible pour appliquer une opération de formage au réceptacle ; et/ou
l'expansion de l'élément expansible dans le cadre d'une opération de thermoformage à un réceptacle localisé au sein de la cavité de moule.
